# EUROPEAN PATENT APPLICATION

(11) **EP 4 832 238 A1**
(43) Date of publication of application: **28.10.2026**
(21) Application number: 24928203.9
(22) Date of filing: 11.12.2024
(51) Int. Cl.: H01M 50/593, H01M 50/597

(54) **BATTERY CELL, BATTERY AND ELECTRIC DEVICE**

(30) Priority: 07.03.2024 CN 202410264166
(71) Applicant: Contemporary Amperex Technology Co., Limited, Ningde, Fujian 352100 (CN)
(72) Inventor: CHENG, Qi, Ningde, Fujian 352100 (CN); XIE, Yongfeng, Ningde, Fujian 352100 (CN); ZHOU, Wenlin, Ningde, Fujian 352100 (CN); YANG, Kaihuan, Ningde, Fujian 352100 (CN); LI, Quankun, Ningde, Fujian 352100 (CN)
(74) Representative: Aera A/S
(86) International application number: PCT/CN2024/138558
(87) International publication number: WO 2025/185274

(57) **Abstract**

A battery cell (12), a battery (100) and an electric device, which belong to the technical field of batteries. The battery cell (12) comprises a casing (121), a first insulating member (125) and a second insulating member (126), wherein the casing (121) comprises a first wall (1213), a second wall (1214) and a side wall (1215); in the direction of the thickness of the first wall (1213), the second wall (1214) and the first wall (1213) are arranged opposite each other; the side wall (1215) is arranged around the first wall (1213) and the second wall (1214); and the first wall (1213) has first edges (12131) and second edges (12132), which are adjacent to one another. The first insulating member (125) covers an outer surface of the first wall (1213). The second insulating member (126) comprises a body portion (1260), first flange portions (1261) and second flange portions (1262), wherein the body portion (1260) covers an outer surface of the side wall (1215); the first flange portions (1261) and the second flange portions (1262) are arranged on the outer surface of the first wall (1213); the first flange portions (1261) are arranged along the first edges (12131); and the second flange portions (1262) are arranged along the second edges (12132). The first insulating member (125) covers at least part of each first flange portion (1261) and at least part of each second flange portion (1262). The first insulating member (125) covers at least part of each first flange portion (1261) and at least part of each second flange portion (1262) to improve the reliability of the battery cell (12).

## Description

### CROSS-REFERENCE TO RELATED APPLICATIONS

The present application claims priority to Chinese Patent Application No. 202410264166.8, filed on March 7, 2024 and entitled "Battery Cell, Battery, and Electric device", which is incorporated herein by reference in its entirety.

### TECHNICAL FIELD

The present application relates to the field of battery technologies, and in particular, to a battery cell, a battery, and an electric device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

How to improve reliability of the battery cell is a problem that urgently needs to be solved in the battery technology.

### SUMMARY

In view of the foregoing problem, the present application provides a battery cell, a battery, and an electric device, which can improve reliability of the battery cell.

According to a first aspect, the present application provides a battery cell, the battery cell comprises a casing, a first insulating member, and a second insulating member, the casing comprises a first wall, a second wall, and a side wall, in the direction of the thickness of the first wall, the second wall and the first wall are arranged opposite each other, the side wall is arranged around the first wall and the second wall, and the first wall has a first edge and a second edge that are adjacent to each other. The first insulating member covers the outer surface of the first wall. The second insulating member comprises a body portion, a first flange portion and a second flange portion, the body portion covers the outer surface of the side wall, the first flange portion and the second flange portion are arranged on the outer surface of the first wall, the first flange portion is arranged along the first edge, and the second flange portion is arranged along the second edge. The first insulating member covers at least part of the first flange portion and at least part of the second flange portion.

In the technical solutions of embodiments of the present application, the first insulating member covers the at least part of the first flange portion and the at least part of the second flange portion, so that a risk of insulation failure of the battery cell caused by warping of the first flange portion and/or the second flange portion may be reduced, which facilitates improving reliability of the battery cell.

In one or a plurality of embodiments of the first aspect, the first flange portion and the second flange portion form an overlapping region at the corner of the first edge and the second edge, and the first insulating member covers the overlapping region.

In the foregoing solutions, because the overlapping region has a high risk of warping, the first insulating member covering the overlapping region may significantly reduce the risk of insulation failure of the battery cell caused by warping of the first flange portion and/or the second flange portion. This facilitates improving reliability of the battery cell.

In one or a plurality of embodiments of the first aspect, the first flange portion has a first side edge away from the body portion, the second flange portion has a second side edge away from the body portion, and the first insulating member covers the first side edge and the second side edge.

In the foregoing solutions, the first insulating member covers the first side edge and the second side edge, so that most of the first flange portion and the second flange portion may be covered by the first insulating member, the risk of warping of the first flange portion and/or the second flange portion may further be reduced, which further facilitates improving reliability of the battery cell.

In one or a plurality of embodiments of the first aspect, the first insulating member is provided with a first hollow region, the first wall forms a first exposed region at a position corresponding to the first hollow region, and the first exposed region is configured to be connected to a box body assembly.

In the foregoing solutions, the battery cell may be directly connected to the box body assembly by disposing the first exposed region, which facilitates improving the connection strength between the box body assembly and the battery cell, thereby reducing a risk of shaking of the battery cell after being grouped, and improving reliability of the battery cell.

In one or a plurality of embodiments of the first aspect, the battery cell further comprises an electrode terminal, and the electrode terminal is arranged on the first wall. The first insulating member is further provided with a second hollow region, and the electrode terminal runs through the second hollow region.

In the foregoing solutions, the second hollow region may be provided for the electrode terminal to pass through, which reduces a risk of interference between the first insulating member and the electrode terminal during assembly of the first insulating member. In addition, the second hollow region may also be used as the assembly reference of the first insulating member, which reduces assembly difficulty of the first insulating member.

In one or a plurality of embodiments of the first aspect, the second hollow region is in communication with the first hollow region.

In the foregoing solutions, because the second hollow region is in communication with the first hollow region, during assembly of the box body assembly, the electrode terminal may also be used as the positioning reference of the box body assembly, which may reduce assembly difficulty of the box body assembly. Only one region needs to be processed on the first insulating member, so that the first insulating member may be adapted to assembly of the electrode terminal and assembly of the box body assembly simultaneously. Production efficiency of the first insulating member may be improved and processing cost of the first insulating member is reduced. In addition, the first insulating member may have high structural stability.

In one or a plurality of embodiments of the first aspect, two electrode terminals are provided, the two electrode terminals are spaced apart along the first direction, two first exposed regions are provided, the two first exposed regions are in one-to-one correspondence with the two electrode terminals, and along the first direction, the first exposed region is located on the side that is of the electrode terminal corresponding to the first exposed region and that is away from the other electrode terminal.

In the foregoing solutions, the two first exposed regions are arranged, so that the first wall can be connected to the box body assembly through the two first exposed regions, which may further improve the connection strength between the first wall and the box body assembly. In addition, during assembly of the box body assembly, because the first exposed region is located on the side that is of the electrode terminal corresponding to the first exposed region and that is away from the other electrode terminal, the box body assembly has large assembly space, and assembly difficulty is low.

In one or a plurality of embodiments of the first aspect, along the first direction, the size of the first exposed region is H₃, and the following formula is satisfied: 10 mm≤H₃≤30 mm.

In the foregoing solutions, when H₃≥10 mm, the first wall may have a large connection area when assembled with the box body assembly, and when H₃≤30 mm, the first insulating member may have a high strength, so that when 10 mm≤H₃≤30 mm, the first insulating member has a high strength, and the first wall has a large connection area when connected to the box body assembly.

In one or a plurality of embodiments of the first aspect, the first edge extends along a second direction, the second edge extends along the first direction, and the first direction, the second direction, and the direction of the thickness of the first wall are perpendicular to each other. In the first direction, the size of the first flange portion is H₂, the minimum distance between an edge of the first insulating member and the first exposed region is H₁, and the following formula is satisfied: H₁-H₂≥2 mm.

In the foregoing solutions, when H₁-H₂≥2 mm, the first exposed region having a large area is formed, and the first insulating member may cover the first flange portion, so that the battery cell has high insulation performance.

In one or a plurality of embodiments of the first aspect, 1 mm≤H₂≤5 mm.

In the foregoing solutions, when H₂≥1 mm, the first flange portion may have a large connection area when assembled with the first wall, which may reduce assembly difficulty of the second insulating member, and when H₂≤5 mm, more space may be reserved for the first exposed region to be arranged on the first wall, which facilitates improving the connection strength between the box body assembly and the first wall, so that when 1 mm≤H₂≤5 mm, the first flange portion may have a large connection area when assembled with the first wall, and more space may be reserved for the first exposed region to be arranged on the first wall.

In one or a plurality of embodiments of the first aspect, 3 mm≤H₁≤7 mm.

In the foregoing solutions, when H₁≥3 mm, the first insulating member may have a large area configured to cover the first flange portion, which reduces the risk of warping of the first flange portion due to the first insulating member not covering the first flange portion after assembly is completed, and facilitates improving reliability of the battery cell, and when H₁≤7 mm, the first hollow region having a large area may be arranged on the first insulating member, so that the first wall forms the first exposed region having a large area, which facilitates improving the connection strength between the box body assembly and the first wall, so that when 3 mm≤H₁≤7 mm, the first insulating member may have a large area configured to cover the first flange portion, and the first wall forms the first exposed region having a large area.

In one or a plurality of embodiments of the first aspect, the first edge extends along the second direction, the second edge extends along the first direction, and the first direction, the second direction, and the direction of the thickness of the first wall are perpendicular to each other. In the second direction, the size of the second flange portion is W₁, the minimum distance between the edge of the first insulating member and the first exposed region is W₂, and the following formula is satisfied: W₂-W₁≥2 mm.

In the foregoing solutions, when W₂-W₁≥2 mm, the first exposed region having a large area is formed, and the first insulating member may cover the second flange portion, so that the battery cell has high insulation performance.

In one or a plurality of embodiments of the first aspect, 1 mm≤W₁≤5 mm.

In the foregoing solutions, when W₁≥1 mm, the first flange portion may have a large connection area when assembled with the first wall, which may reduce assembly difficulty of the second insulating member, and when W₁≤5 mm, more space may be reserved for the first exposed region to be arranged on the first wall, which facilitates improving the connection strength between the box body assembly and the first wall, so that when 1 mm≤W₁≤5 mm, the first flange portion may have a large connection area when assembled with the first wall, and more space may be reserved for the first exposed region to be arranged on the first wall.

In one or a plurality of embodiments of the first aspect, 3 mm≤W₂≤7 mm.

In the foregoing solutions, when W₂≥3 mm, the first insulating member may have a large area configured to cover the first flange portion, which reduces the risk of warping of the first flange portion due to the first insulating member not covering the first flange portion after assembly is completed, and facilitates improving reliability of the battery cell, and when W₂≤7 mm, the first hollow region having a large area may be arranged on the first insulating member, so that the first wall forms the first exposed region having a large area, which facilitates improving the connection strength between the box body assembly and the first wall, so that when 3 mm≤W₂≤7 mm, the first insulating member has a large area configured to cover the first flange portion, and the first wall may form the first exposed region having a large area.

In one or a plurality of embodiments of the first aspect, the second hollow region and the first hollow region are spaced apart.

In the foregoing solutions, a part that is of the first insulating member and that is located between the second hollow region and the first hollow region may be configured to be connected to the first wall, which facilitates improving the connection strength between the first insulating member and the first wall.

In one or a plurality of embodiments of the first aspect, the second wall and the side wall are of an integrally formed structure, along the direction of the thickness of the first wall, one end of the side wall is connected to the second wall, the other end of the side wall encloses an opening, and the first wall is an end cover that closes the opening.

In the foregoing solutions, because the second wall and the side wall are integrally formed, a quantity of seams between the second wall and the side wall is small, assembly difficulty of the second insulating member is low, and flatness after assembly is high.

In one or a plurality of embodiments of the first aspect, the body portion further covers the outer surface of the second wall, the body portion is provided with a third hollow region, the second wall forms a second exposed region at a position corresponding to the third hollow region, and the second exposed region is configured to be connected to a box body.

In the foregoing solutions, the first wall and the second wall of the casing can be connected to the box body assembly and the box body respectively through the first exposed region and the second exposed region, so that structural stability after the battery cell is assembled to the box body can be improved.

In one or a plurality of embodiments of the first aspect, the battery cell further comprises a pressure relief mechanism, the pressure relief mechanism is arranged on the first wall, the first insulating member is provided with a through hole, and along the direction of the thickness of the first wall, the projection of the pressure relief mechanism is located in the through hole.

In the foregoing solutions, because the projection of the pressure relief mechanism is located in the through hole, when the battery cell is in thermal runaway, the first insulating member does not block the pressure relief mechanism, so that pressure relief of the battery cell may be smoother, which facilitates improving reliability of the battery cell.

According to a second aspect, an embodiment of the present application provides a battery, comprising the battery cell in one or a plurality of embodiments of the first aspect.

In the foregoing solutions, because the battery cell in one or a plurality of embodiments of the first aspect has high reliability, the battery comprising the battery cell in one or a plurality of embodiments of the first aspect also has high reliability.

According to a third aspect, the present application provides a battery, comprising a box body, a box body assembly, and a plurality of battery cells in one or a plurality of embodiments of the first aspect, and the box body assembly is arranged in the box body. The plurality of battery cells are arranged in the box body. The box body assembly is connected to first exposed regions of the plurality of battery cells.

In the foregoing solutions, because the battery cell in one or a plurality of embodiments of the first aspect has high reliability, the battery comprising the battery cell in one or a plurality of embodiments of the first aspect also has high reliability.

According to a fourth aspect, the present application provides an electric device, comprising the battery in one or a plurality of embodiments of the second aspect, and the battery is configured to supply electric energy.

In the foregoing solutions, because the battery in one or a plurality of embodiments of the second aspect has high reliability, the electric device comprising the battery in one or a plurality of embodiments of the second aspect also has high reliability.

The foregoing description is merely an overview of the technical solutions of the present application. For a clearer understanding of the technical means of the present application, the present application can be carried out in accordance with the content of the description, and to make other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. In addition, the same reference numerals are used to denote the same components throughout the accompanying drawings. In the accompanying drawings:
FIG. 1 is a schematic structural diagram of a vehicle according to some embodiments of the present application;
FIG. 2 is an exploded diagram of a battery according to some embodiments of the present application;
FIG. 3 is an exploded diagram of a battery cell according to some embodiments of the present application;
FIG. 4 is a schematic diagram of a partial structure of a battery according to yet some embodiments of the present application;
FIG. 5 is an axonometric view of a battery cell according to yet some embodiments of the present application;
FIG. 6 is an axonometric view of a partial structure of a battery cell according to yet some embodiments of the present application;
FIG. 7 is a front view of a battery cell according to yet some embodiments of the present application;
FIG. 8 is an exploded diagram of a battery cell according to yet some embodiments of the present application;
FIG. 9 is a top view of a battery cell according to yet some embodiments of the present application;
FIG. 10 is a top view of a battery cell according to still yet some embodiments of the present application;
FIG. 11 is a bottom view of a battery cell according to some embodiments of the present application; and
FIG. 12 is a schematic diagram of a partial structure of a battery according to some other embodiments of the present application.

Reference numerals in specific implementations are as follows:
1000, vehicle; 200, controller; 300, motor; 100, battery; 11, box body; 111, first part; 112, second part; 12, battery cell; 121, casing; 1211, end cover; 1212, casing body; 1213, first wall; 12131, first edge; 12132, second edge; 12133, first exposed region; 1214, second wall; 12141, second exposed region; 1215, side wall; 122, electrode assembly; 123, electrode terminal; 124, adapter sheet; 125, first insulating member; 1251, first hollow region; 1252, second hollow region; 1253, through hole; 126, second insulating member; 1260, body portion; 12601, third hollow region; 1261, first flange portion; 12611, first side edge; 1262, second flange portion; 12621, second side edge; 1263, overlapping region; 127, pressure relief mechanism; 128, upper plastic; 13, box body assembly; X, first direction; and Y, second direction.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the present application, the battery cell may include but is not limited to a lithium-ion secondary battery, a lithium-ion primary battery, a lithium-sulfur battery, a sodium-lithium ion battery, a sodium-ion battery, a magnesium-ion battery, or the like. The shape of the battery cell may include but is not limited to the cylinder shape, the shape of a flat body, the cuboid shape, other shapes, or the like. The battery cell may include but is not limited to a cylindrical battery cell, a square battery cell, a pouch battery cell, and a blade battery cell based on a packaging method.

In some high-power application scenarios such as an electric vehicle, the application of the battery includes three levels: a battery cell, a battery module, and a battery. The battery module is formed by electrically connecting a quantity of battery cells together and putting the battery cells in one frame to protect the battery cells from external impact, heat, vibration, and the like. The battery refers to a final status of a battery system installed in the electric vehicle. A battery mentioned in the embodiments of the present application refers to a single physical module including one or a plurality of battery cells to provide a higher voltage and capacity. The battery generally includes a case for encapsulating one or more battery cells. The box body may reduce the risk that liquids or other foreign objects affect the charging or discharging of the battery cell.

The following descriptions mainly focus on a cuboid battery cell. It should be understood that, the following embodiments described are also applicable in some aspects to the cylindrical battery cell, or the pouch battery cell, or the blade battery cell.

In a general battery cell structure, the battery cell includes a casing, an electrode assembly, and a liquid electrolyte. The casing includes an end cover and a casing body, and the end cover closes an opening of the casing body, to define accommodation space for accommodating the electrode assembly.

The electrode assembly is accommodated in the accommodation space, and the electrode assembly includes a positive electrode sheet, a negative electrode sheet, and a separator. Working of the battery cell mainly relies on migration of metal ions between the positive electrode sheet and the negative electrode sheet. The positive electrode sheet includes a positive electrode current collector and a positive electrode active material layer. The positive electrode active material layer is coated on the surface of the positive electrode current collector. The positive electrode current collector not coated with the positive electrode active material layer protrudes from the positive electrode current collector coated with the positive electrode active material layer, and the positive electrode current collector not coated with the positive electrode active material layer is used as a positive electrode tab. A lithium-ion battery is used as an example, for which, the positive electrode current collector may be made of aluminum, and the positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on the surface of the negative electrode current collector. The negative electrode current collector not coated with the negative electrode active material layer protrudes from the negative electrode current collector coated with the negative electrode active material layer, and the negative electrode current collector not coated with the negative electrode active material layer is used as a negative electrode tab. The negative electrode current collector may be made of copper, and the negative electrode active material may be carbon, silicon, or the like. To ensure that a large current passes through without any fusing, a plurality of positive electrode tabs are arranged and stacked together, and a plurality of negative electrode tabs are arranged and stacked together. In addition, a forming method of the electrode assembly may include but is not limited to a winding method, a lamination method, or the like.

Generally, the tab is electrically connected to a conductive member to lead out electric energy of the electrode assembly. In some cases, the conductive member is a connection sheet connecting the tab and the electrode terminal. In some other cases, the conductive member is the electrode terminal.

The electrode terminals generally include a positive electrode terminal and a negative electrode terminal. For the cuboid battery cell, the electrode terminal is generally arranged on an end cover part. In some other cases, the electrode terminal may also be arranged on a casing body part. The plurality of battery cells are connected together through series connection and/or parallel connection via the electrode terminal, to be applied to various application scenarios.

In the development of battery technologies, various design factors, for example, performance parameters such as energy density, cycle life, discharge capacity, and charge/discharge rate are simultaneously taken into consideration. In addition, reliability of the battery needs to be taken into consideration.

The battery cell further includes a blue film and a top patch, the blue film covers the outer surface of the casing, the top patch covers the end cover, and the blue film and the top patch are generally made of an insulation material to insulate and isolate the battery cell. In a blue film assembly process, to improve the connection strength between the blue film and the casing, after the blue film is wrapped on the outer surface of the casing, blue film flange of a part of the blue film is formed on the surface of the end cover. When the top patch is assembled, considering that space needs to be reserved on the surface of the end cover for connecting the box body assembly, generally, the top patch of the battery cell is not covered with blue film flange. In a process of grouping the battery cell, a warping risk of the blue film flange is high. If blue film flange and warping occurs, an electrical gap of the battery cell is lower than a design value, which reduces reliability.

In view of this, the present application provides a battery cell, the battery cell includes a casing, a first insulating member, and a second insulating member, the casing includes a first wall, a second wall, and a side wall, in the direction of the thickness of the first wall, the second wall and the first wall are arranged opposite each other, the side wall is arranged around the first wall and the second wall, and the first wall has a first edge and a second edge that are adjacent to each other. The first insulating member covers the outer surface of the first wall. The second insulating member includes a body portion, a first flange portion and a second flange portion, the body portion covers the outer surface of the side wall, the first flange portion and the second flange portion are arranged on the outer surface of the first wall, the first flange portion is arranged along the first edge, and the second flange portion is arranged along the second edge. The first insulating member covers at least part of the first flange portion and at least part of the second flange portion. The first insulating member covers the at least part of the first flange portion and the at least part of the second flange portion so that a risk of insulation failure of the battery cell caused by warping of the first flange portion and/or the second flange portion may be reduced, which facilitates improving reliability of the battery cell.

The technical solutions described in the embodiments of the present application are applicable to a battery cell, a battery, and an electric device.

The electric device includes but is not limited to: an electric bicycle, an electric vehicle, a ship, a spacecraft, or the like, for example, the spacecraft includes an aircraft, a rocket, a space shuttle, a spaceship.

For ease of description, the following embodiments of the present application are described by using an example in which an electric device in an embodiment of this application is a vehicle.

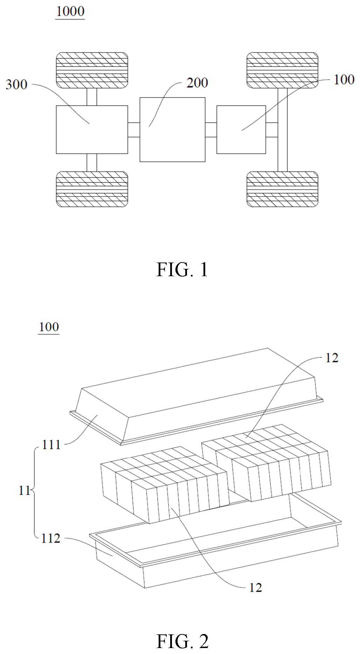

For example, FIG. 1 is a schematic structural diagram of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle, or the like. A motor 300, a controller 200, and a battery 100 may be arranged inside the vehicle 1000. The controller 200 is configured to control the battery 100 to supply power to the motor 300. For example, the battery 100 may be arranged at the bottom, or at the head, or at the tail of the vehicle 1000. The battery 100 may be configured to supply power to the vehicle 1000, for example, the battery 100 may be used as an operating power source for the vehicle 1000, used for a circuit system of the vehicle 1000, for example, used for operating power requirements for starting, navigation, and running of the vehicle 1000. In another embodiment of the present application, the battery 100 may be used not only as the operating power source of the vehicle 1000, but also as a driving power source of the vehicle 1000, instead of or partially instead of fuel or natural gas to provide driving power to the vehicle 1000.

To satisfy different power requirements, the battery 100 may include a plurality of battery cells 12, where the plurality of battery cells 12 may be connected through series connection, parallel connection, or series-parallel connection, and series-parallel connection refers to a combination of series connection and parallel connection. The battery 100 may also be referred to as a battery pack. Optionally, the plurality of battery cells 12 may first form a battery module through series connection, parallel connection, or series-parallel connection, and then a plurality of battery modules form the battery 100 through series connection, parallel connection, or series-parallel connection. In other words, the plurality of battery cells 12 may directly form the battery 100, or may form the battery module first, and then the battery module forms the battery 100.

For example, referring to FIG. 2, FIG. 2 is an exploded diagram of a battery 100 according to some embodiments of the present application. The battery 100 includes a plurality of battery cells 12. The battery 100 may further include a box body 11, an interior of the box body 11 is of a hollow structure, and the plurality of battery cells 12 are accommodated in the box body 11. As shown in FIG. 2, a first part 111 and a second part 112 are provided respectively, and the first part 111 and the second part 112 are buckled together. The shapes of the first part 111 and the second part 112 may be determined based on the shape of the plurality of battery cells 12 combined, and both the first part 111 and the second part 112 have an opening. For example, the first part 111 and the second part 112 each may be a hollow cuboid with only one surface being an opening surface, the opening of the first part 111 and the opening of the second part 112 are arranged opposite to each other, and the first part 111 and the second part 112 are buckled with each other to form the box body 11 having a closed chamber. The plurality of battery cells 12 combined through series connection, parallel connection, or series-parallel connection with each other are arranged in the box body 11 formed by buckling the first part 111 and the second part 112.

Optionally, the battery 100 may further include other structures. Details are not described herein again. For example, the battery 100 may further include a bus bar component, the bus bar component is configured to implement electrical connection between the plurality of battery cells 12, such as parallel connection, series connection, or series-parallel connection. Specifically, the bus bar component may implement electrical connection between the battery cells 12 by connecting to an electrode terminal 123 of the battery cell 12. Further, the bus bar component may be fixed to the electrode terminal 123 of the battery cell 12 through welding. Electrical energy of the plurality of battery cells 12 may be further led out through the box body 11 through a conductive mechanism. For example, the battery 100 may further include a box body assembly 13, and the box body assembly 13 is configured to connect the plurality of battery cells 12, to improve structural stability after the battery cell 12 is assembled to the box body 11.

A quantity of battery cells 12 may be set to any value according to different power requirements. The plurality of battery cells 12 may be connected through series connection, parallel connection, or series-parallel connection to implement large capacity or power. Because the quantity of battery cells 12 included in each battery 100 may be great, for ease of mounting, the battery cells 12 may be arranged in group, and each group of battery cells 12 forms the battery module. The quantity of battery cells 12 included in the battery module is not limited and may be set according to requirements. The battery 100 may include a plurality of battery modules, and these battery modules may be connected through series connection, parallel connection, or series-parallel connection.

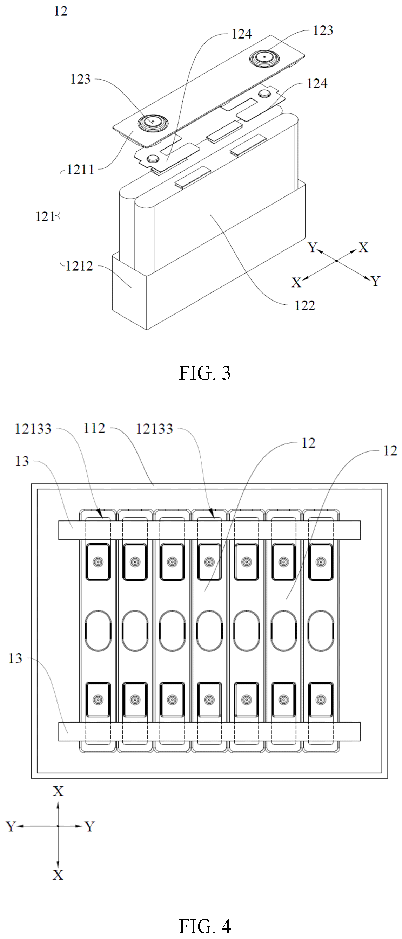

Referring to FIG. 3, FIG. 3 is an exploded view of a battery cell 12 according to some embodiments of the present application. The battery cell 12 includes one or a plurality of electrode assemblies 122 and a casing 121. The casing 121 may include a casing body 1212, and a plurality of wall portions of the casing body 1212, that is, a plurality of wall portions of the casing 121, enclose a cavity, and the cavity may be configured to accommodate the electrode assembly 122. The casing body 1212 depends on the shape of the combined one or the plurality of electrode assemblies 122, for example, the casing body 1212 may be a hollow cuboid, a cube, or a regular polyhedron, and one of the surfaces of the casing body 1212 has an opening, so that the one or the plurality of electrode assemblies 122 may be placed in the casing body 1212. The casing body 1212 is filled with an electrolyte, for example, a liquid electrolyte.

The battery cell 12 may further include two electrode terminals 123, and the two electrode terminals 123 may be arranged on an end cover 1211. The end cover 1211 is generally in the shape of a flat plate, the two electrode terminals 123 are fixed to the flat plate surface of the end cover 1211, and the two electrode terminals 123 are a positive electrode terminal and a negative electrode terminal respectively. Each electrode terminal 123 is correspondingly provided with a connection sheet 124, the connection sheet is located between the end cover 1211 and the electrode assembly 122, and is configured to implement electrical connection between the electrode assembly 122 and the electrode terminal 123. In the battery cell 12, according to actual use requirements, there may be one or a plurality of electrode assemblies 122, and a plurality of independent electrode assemblies 122 are arranged in the battery cell 12.

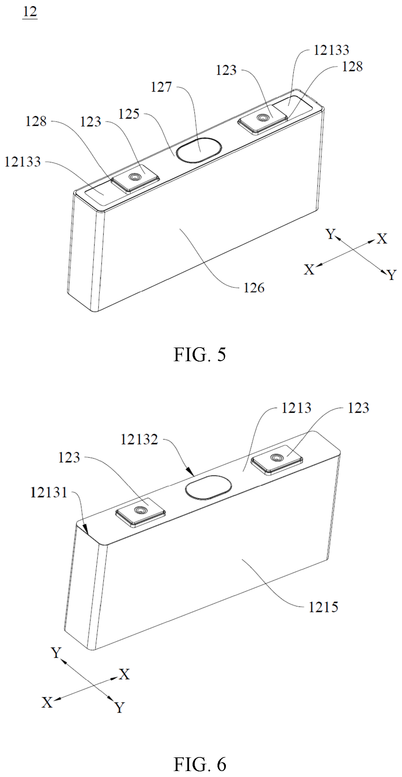

According to some embodiments of the present application, referring to FIG. 5 to FIG. 8, the present application provides a battery cell 12. The battery cell 12 includes a casing 121, a first insulating member 125 and a second insulating member 126. The casing 121 includes a first wall 1213, a second wall 1214 and a side wall 1215. In the direction of the thickness of the first wall 1213, the second wall 1214 is arranged opposite to the first wall 1213. The side wall 1215 is arranged around the first wall 1213 and the second wall 1214. The first wall 1213 has a first edge 12131 and a second edge 12132 that are adjacent to each other. The first insulating member 125 covers the outer surface of the first wall 1213. The second insulating member 126 includes a body portion 1260, a first flange portion 1261 and a second flange portion 1262. The body portion 1260 covers the outer surface of the side wall 1215. The first flange portion 1261 and the second flange portion 1262 are arranged on the outer surface of the first wall 1213. The first flange portion 1261 is arranged along the first edge 12131. The second flange portion 1262 is arranged along the second edge 12132. The first insulating member 125 covers at least part of the first flange portion 1261 and at least part of the second flange portion 1262.

The shape of the casing 121 may include but is not limited to a cylinder, a cuboid, a blade, or the like. The material of the casing 121 may include but is not limited to copper, iron, aluminum, steel, aluminum alloy, or the like.

The first wall 1213 and the side wall 1215 may be integrally formed or separately formed, and the second wall 1214 and the side wall 1215 may be integrally formed or separately formed.

In some embodiments, the first wall 1213 is an end cover 1211.

In some embodiments, the side wall 1215 and the second wall 1214 form the casing body 1212.

The second wall 1214 being arranged opposite to the first wall 1213 and the side wall 1215 being arranged around the first wall 1213 and the second wall 1214 means that the casing 121 has an accommodating cavity, and the accommodating cavity may be configured to accommodate the electrode assembly 122, the electrolyte, and the like.

The first wall 1213 having a first edge 12131 and a second edge 12132 that are adjacent to each other means that the first edge 12131 and the second edge 12132 are not two parallel edges, and the first edge and the second edge have an intersection point or a part of the first edge 12131 and the second edge 12132 meet at one place.

The material of the first insulating member 125 may include but is not limited to rubber, silicone, rubber, or the like. The first insulating member 125 may cover the outer surface of the first wall 1213 through adhesion, clamping, welding, or the like.

The material of the second insulating member 126 may include but is not limited to rubber, silicone, rubber, or the like. The second insulating member 126 may cover the outer surface of the second wall 1214 and/or the side wall 1215 through adhesion, clamping, welding, or the like.

The body portion 1260, the first flange portion 1261, and the second flange portion 1262 may be integrally formed or separately formed. Any two of the body portion, the first flange portion, and the second flange portion may be integrally formed or separately formed.

In some embodiments, the first flange portion 1261 has a first side edge 12611 away from the body portion 1260, the second flange portion 1262 has a second side edge 12621 away from the body portion 1260, and the first insulating member 125 covers a part of the first side edge 12611 and a part of the second side edge 12621.

In some embodiments, the battery cell 12 may also include a pressure relief mechanism 127, the pressure relief mechanism 127 may be arranged on any wall portion of the casing 121, for example, the pressure relief mechanism 127 may be arranged on the first wall 1213, the second wall 1214, or the side wall 1215.

An example in which the embodiment in which the first flange portion 1261 and the second flange portion 1262 are adhered to the first wall 1213 through glue is used. The adhesive strength between the first flange portion 1261 and the second flange portion 1262 and the first wall 1213 needs to consider various factors, for example, uniformity of glue coating, viscosity of glue, the ambient temperature, and the ambient humidity. After glue coating and adhesion, a risk of separating the first flange portion 1261 and the second flange portion 1262 from the first wall 1213 exists, or this may refer to a risk of warping of the first flange portion 1261 and the second flange portion 1262. The electrical gap needs to be considered in a design process of the battery cell 12. The electrical gap refers to a distance of a minimum air gap between two conductors or between a conductor and another conductor. If the electrical gap is insufficient, a risk of short circuit between the two conductors is high. An example in which the battery cell 12 is the foregoing conductor is used. The electrical gap of the battery cell 12 may satisfy the design requirements by covering the casing 121 with the insulation material. If the first flange portion 1261 and the second flange portion 1262 are warped, the electrical gap between the battery cells 12 or between the battery cell 12 and the remaining conductors is insufficient, thereby increasing the risk of insulation failure of the battery cell 12.

In the technical solutions of embodiments of the present application, the first insulating member 125 covers the at least part of the first flange portion 1261 and the at least part of the second flange portion 1262, so that the risk of insulation failure of the battery cell 12 caused by warping of the first flange portion 1261 and/or the second flange portion 1262 may be reduced, which facilitates improving reliability of the battery cell 12.

According to some embodiments of the present application, referring to FIG. 5 to FIG. 8, the first flange portion 1261 and the second flange portion 1262 form an overlapping region 1263 at the corner of the first edge 12131 and the second edge 12132, and the first insulating member 125 covers the overlapping region 1263.

An example in which the first flange portion 1261 and the second flange portion 1262 cover the outer surfaces through adhesion is used. The first flange portion 1261 and the second flange portion 1262 are folded at the corner of the first edge 12131 and the second edge 12132 to form the overlapping region 1263. Because the overlapping region 1263 has a small area and an uneven adhesive surface, the adhesive strength of an overlapping part of the first flange portion 1261 and the second flange portion 1262 is lower than the adhesive strength between the first flange portion 1261 or the second flange portion 1262 and the first wall 1213, that is, a risk of warping of the overlapping region 1263 is high.

The first insulating member 125 covering the overlapping region 1263 means that the first insulating member 125 and the overlapping region 1263 at least partially overlap.

In the foregoing solutions, because the overlapping region 1263 has a high risk of warping, the first insulating member 125 covering the overlapping region 1263 may significantly reduce the risk of insulation failure of the battery cell 12 caused by warping of the first flange portion 1261 and/or the second flange portion 1262. This facilitates improving reliability of the battery cell 12.

According to some embodiments of the present application, referring to FIG. 5 to FIG. 8, the first flange portion 1261 has the first side edge 12611 away from the body portion 1260, the second flange portion 1262 has the second side edge 12621 away from the body portion 1260, and the first insulating member 125 covers the first side edge 12611 and the second side edge 12621.

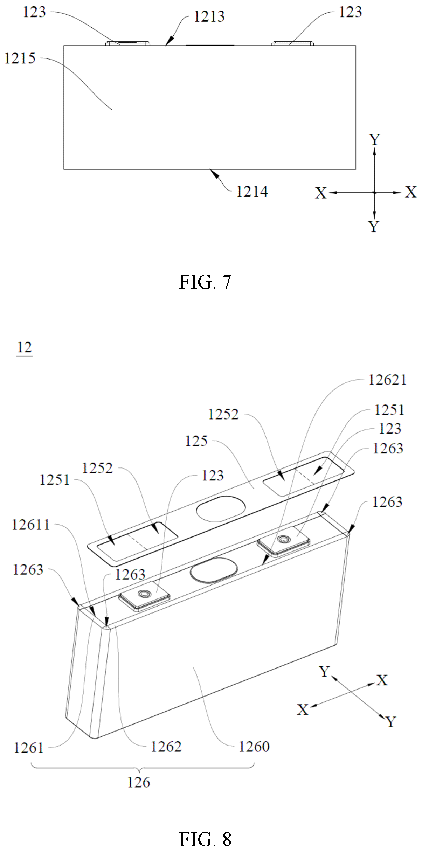

Referring to FIG. 6 and FIG. 8, the first insulating member 125 covering the first side edge 12611 and the second side edge 12621 means that an edge of an opening enclosed by the first flange portion 1261 and the second flange portion 1262 is completely covered by the first insulating member 125. In some embodiments, both the first flange portion 1261 and the second flange portion 1262 and the body portion 1260 are integrally formed, a position at which the first side edge 12611 and the second side edge 12621 are located has the highest risk of warping, and covering the first side edge 12611 and the second side edge 12621 may significantly reduce the foregoing risk.

In the foregoing solutions, the first insulating member 125 covers the first side edge 12611 and the second side edge 12621, so that most of the first flange portion 1261 and the second flange portion 1262 may be covered by the first insulating member 125, the risk of warping of the first flange portion 1261 and/or the second flange portion 1262 may further be reduced, which further facilitates improving reliability of the battery cell 12.

According to some embodiments of the present application, referring to FIG. 5 to FIG. 8, the first insulating member 125 is provided with a first hollow region 1251, the first wall 1213 forms a first exposed region 12133 at a position corresponding to the first hollow region 1251, and the first exposed region 12133 is configured to be connected to a box body assembly 13.

The box body assembly 13 may be a bead arranged in the box body 11, or may be a beam or the like inside the box body 11. The material of the bead may include but is not limited to metal or rubber.

The battery 100 includes the plurality of battery cells 12, the box body assembly 13 is arranged in the box body 11, and the box body assembly 13 is configured to be connected to the plurality of battery cells 12, to fasten the plurality of battery cells 12 into a whole, thereby facilitating reducing a phenomenon that the plurality of battery cells 12 shake or collide with each other in the box body 11.

The first wall 1213 forms the first exposed region 12133 at the position corresponding to the first hollow region 1251, that is, the first insulating member 125 is provided with the first hollow region 1251, so that the first wall 1213 of the casing 121 has a region avoided by the first hollow region 1251, thereby forming the first exposed region 12133 not covered by the first insulating member 125 on the first wall 1213.

Optionally, there may be one or a plurality of first hollow regions 1251 arranged on the first insulating member 125.

The shape of the first hollow region 1251 may include but is not limited to a triangle, a rectangle, a pentagon, a circle, an ellipse, or the like.

The first hollow region 1251 may be formed by providing a hole on the first insulating member 125.

It should be noted that, the first exposed region 12133 is configured to be connected to the box body assembly 13, and the first exposed region 12133 may also be connected to the box body assembly 13 in various manners, such as adhesion or welding. The box body assembly 13 being adhered to the first exposed region 12133 is used for description.

In the foregoing solutions, the battery cell 12 may be directly connected to the box body assembly 13 by disposing the first exposed region 12133, which facilitates improving the connection strength between the box body assembly 13 and the battery cell 12, thereby reducing a risk of shaking of the battery cell 12 after being grouped, and improving reliability of the battery cell 12.

According to some embodiments of the present application, referring to FIG. 5 to FIG. 8, the battery cell 12 further includes the electrode terminal 123, and the electrode terminal 123 is arranged on the first wall 1213. The first insulating member 125 is further provided with a second hollow region 1252, and the electrode terminal 123 runs through the second hollow region 1252.

The electrode terminal 123 running through the second hollow region 1252 means that the surface of the electrode terminal 123 configured to be electrically connected to the bus bar component is not covered by the first insulating member 125.

In some embodiments, the battery cell 12 further includes an upper plastic 128, the upper plastic 128 is configured to insulate and isolate the electrode terminal 123 and the first wall 1213, and the upper plastic 128 also runs through the second hollow region 1252.

In the foregoing solutions, the second hollow region 1252 may be provided for the electrode terminal 123 to pass through, which reduces a risk of interference between the first insulating member 125 and the electrode terminal 123 during assembly of the first insulating member 125. In addition, the second hollow region 1252 may also be used as the assembly reference of the first insulating member 125, which reduces assembly difficulty of the first insulating member.

According to some embodiments of the present application, referring to FIG. 5 to FIG. 8, the second hollow region 1252 is in communication with the first hollow region 1251.

The shape and the size of the first hollow region 1251 may be the same as or different from the shape and the size of the second hollow region 1252.

During an assembly process of the box body assembly 13, the box body assembly 13 may cover the first wall 1213 along the surface that is of the electrode terminal 123 and that is close to the first exposed region 12133, that is, the electrode terminal 123 may be used as the positioning reference of the box body assembly 13. Similarly, because the electrode terminal 123 needs to pass through the first insulating member 125 through the second hollow region 1252, the first insulating member 125 is sleeved around the electrode terminal 123 through the second hollow region 1252, and positioning of the first insulating member 125 is also completed. In addition, only one region needs to be processed to simultaneously satisfy passing through of the electrode terminal 123 and arrangement of the first exposed region 12133, so that a quantity of processing times of the first insulating member 125 is reduced, and the structural strength is higher than the structural strength of the first insulating member 125 that needs to be processed for many times.

In the foregoing solutions, because the second hollow region 1252 is in communication with the first hollow region 1251, during assembly of the box body assembly 13, the electrode terminal 123 may also be used as the positioning reference of the box body assembly 13, which may reduce assembly difficulty of the box body assembly 13. Only one region needs to be processed on the first insulating member 125, so that the first insulating member 125 may be adapted to assembly of the electrode terminal 123 and assembly of the box body assembly 13 simultaneously. Production efficiency of the first insulating member 125 may be improved and processing cost thereof is reduced. In addition, the first insulating member 125 may have high structural stability.

According to some embodiments of the present application, referring to FIG. 5 to FIG. 8, two electrode terminals 123 are provided, the two electrode terminals 123 are spaced apart along the first direction X, two first exposed regions 12133 are provided, the two first exposed regions 12133 are in one-to-one correspondence with the two electrode terminals 123, and along the first direction X, the first exposed region 12133 is located on the side that is of the electrode terminal 123 corresponding to the first exposed region 12133 and that is away from the other electrode terminal 123.

The size of the battery cell 12 is generally smaller than the size of the box body 11, and a distance between the two electrode terminals 123 in a single battery cell 12 is also small. The first exposed region 12133 being located on the side that is of the electrode terminal 123 corresponding to the first exposed region 12133 and that is away from the other electrode terminal 123 means that large space is provided for the box body assembly 13 for assembly, and both manual assembly and automatic device assembly have large operation space, and assembly difficulty is low.

In the foregoing solutions, the two first exposed regions 12133 are arranged, so that the first wall 1213 can be connected to the box body assembly 13 through the two first exposed regions 12133, which may further improve the connection strength between the first wall 1213 and the box body assembly 13. In addition, during assembly of the box body assembly 13, because the first exposed region 12133 is located on the side that is of the electrode terminal 123 corresponding to the first exposed region 12133 and that is away from the other electrode terminal 123, the box body assembly 13 has large assembly space, and assembly difficulty is low.

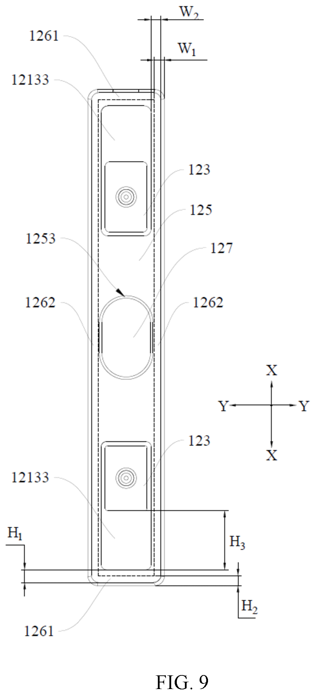

According to some embodiments of the present application, referring to FIG. 5 to FIG. 9, along the first direction X, the size of the first exposed region 12133 is H₃, and the following formula is satisfied: 10 mm≤H₃≤30 mm.

In the first direction X, the size H₃ of the first exposed region 12133 may be any value greater than or equal to 10 mm and less than or equal to 30 mm, for example, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, or 30 mm.

In the foregoing solutions, when H₃≥10 mm, the first wall 1213 may have a large connection area when assembled with the box body assembly 13, and when H₃≤30 mm, the first insulating member 125 may have a high strength, so that when 10 mm≤H₃≤30 mm, the first insulating member 125 has a high strength, and the first wall 1213 has a large connection area when connected to the box body assembly 13.

According to some embodiments of the present application, referring to FIG. 5 to FIG. 9, the first edge 12131 extends along the second direction Y, the second edge 12132 extends along the first direction X, and the first direction X, the second direction Y, and the direction of the thickness of the first wall 1213 are perpendicular to each other. In the first direction X, the size of the first flange portion 1261 is H₂, the minimum distance between an edge of the first insulating member 125 and the first exposed region 12133 is H₁, and the following formula is satisfied: H₁-H₂≥2 mm.

In the first direction X, a difference between the minimum distance between the edge of the first insulating member 125 and the first exposed region 12133 and the size of the first flange portion 1261 may be any value greater than or equal to 2 mm, for example, 0.2 mm, 0.4 mm, 0.6 mm, 0.8 mm, 1 mm, 1.2 mm, 1.4 mm, 1.6 mm, 1.8 mm, or 2 mm.

In the foregoing solutions, when H₁-H₂≥2 mm, the first exposed region 12133 having a large area is formed, and the first insulating member 125 may cover the first flange portion 1261, so that the battery cell 12 has high insulation performance.

According to some embodiments of the present application, referring to FIG. 5 to FIG. 9, 1mm≤H₂≤5mm.

In the first direction X, the size of the first flange portion 1261 may be any value greater than or equal to 1 mm and less than or equal to 5 mm, for example, 1 mm, 1.2 mm, 1.4 mm, 1.6 mm, 1.8 mm, 2 mm, 2.2 mm, 2.4 mm, 2.6 mm, 2.8 mm, 3 mm, 3.2 mm, 3.4 mm, 3.6 mm, 3.8 mm, 4 mm, 4.2 mm, 4.4 mm, 4.6 mm, 4.8 mm, or 5 mm.

In the foregoing solutions, when H₂≥1 mm, the first flange portion 1261 may have a large connection area when assembled with the first wall 1213, which may reduce assembly difficulty of the second insulating member 126, and when H₂≤5 mm, more space may be reserved for the first exposed region 12133 to be arranged on the first wall 1213, which facilitates improving the connection strength between the box body assembly 13 and the first wall 1213, so that when 1 mm≤H₂≤5 mm, the first flange portion 1261 may have a large connection area when assembled with the first wall 1213, and more space may be reserved for the first exposed region 12133 to be arranged on the first wall 1213.

According to some embodiments of the present application, referring to FIG. 5 to FIG. 9, 3mm≤H₁≤7mm.

In the first direction X, the minimum distance between the edge of the first insulating member 125 and the first exposed region 12133 may be any value greater than or equal to 3 mm and less than or equal to 7 mm, for example, 3 mm, 3.5 mm, 4 mm, 4.5 mm, 5 mm, 5.5 mm, 6 mm, 6.5 mm, or 7 mm.

In the foregoing solution, when H₁≥3 mm, the first insulating member 125 may have a large area configured to cover the first flange portion 1261, which reduces the risk of warping of the first flange portion 1261 due to the first insulating member 125 not covering the first flange portion 1261 after assembly is completed, which facilitates improving reliability of the battery cell 12, and when H₁≤7 mm, the first hollow region 1251 having a large area may be arranged on the first insulating member 125, so that the first exposed region 12133 formed by the first wall 1213 has a large area, which facilitates improving the connection strength between the box body assembly 13 and the first wall 1213, so that when 3 mm≤H₁≤7 mm, the first insulating member 125 has a large area configured to cover the first flange portion 1261, and the first wall 1213 may form the first exposed region 12133 having a large area.

According to some embodiments of the present application, referring to FIG. 5 to FIG. 9, the first edge 12131 extends along the second direction Y, the second edge 12132 extends along the first direction X, and the first direction X, the second direction Y, and the direction of the thickness of the first wall 1213 are perpendicular to each other. In the second direction Y, the size of the second flange portion 1262 is W₁, the minimum distance between the edge of the first insulating member 125 and the first exposed region 12133 is W₂, and the following formula is satisfied: W₂-W₁≥2 mm.

In the second direction Y, a difference between the minimum distance between the edge of the first insulating member 125 and the first exposed region 12133 and the size of the second flange portion 1262 may be any value greater than or equal to 2 mm, for example, 0.2 mm, 0.4 mm, 0.6 mm, 0.8 mm, 1 mm, 1.2 mm, 1.4 mm, 1.6 mm, 1.8 mm, or 2 mm.

In the foregoing solutions, when W₂-W₁≥2mm, the first exposed region 12133 having a large area is formed, and the first insulating member 125 may cover the second flange portion 1262, so that the battery cell 12 has high insulation performance.

According to some embodiments of the present application, referring to FIG. 5 to FIG. 9, 1mm≤W₁≤5mm.

Along the second direction Y, the size of the second flange portion 1262 may be any value greater than or equal to 1 mm and less than or equal to 5 mm, for example, 1 mm, 1.2 mm, 1.4 mm, 1.6 mm, 1.8 mm, 2 mm, 2.2 mm, 2.4 mm, 2.6 mm, 2.8 mm, 3 mm, 3.2 mm, 3.4 mm, 3.6 mm, 3.8 mm, 4 mm, 4.2 mm, 4.4 mm, 4.6 mm, 4.8 mm, or 5 mm.

In the foregoing solutions, when W₁≥1 mm, the first flange portion 1261 may have a large connection area when assembled with the first wall 1213, which may reduce assembly difficulty of the second insulating member 126, and when W₁≤5 mm, more space may be reserved for the first exposed region 12133 to be arranged on the first wall 1213, which facilitates improving the connection strength between the box body assembly 13 and the first wall 1213, so that when 1 mm≤W₁≤5 mm, the first flange portion 1261 may have a large connection area when assembled with the first wall 1213, and more space may be reserved for the first exposed region 12133 to be arranged on the first wall 1213.

According to some embodiments of the present application, referring to FIG. 5 to FIG. 9, 3mm≤W₂≤7mm.

In the second direction Y, the minimum distance between the edge of the first insulating member 125 and the first exposed region 12133 may be any value greater than or equal to 3 mm and less than or equal to 7 mm, for example, 3 mm, 3.5 mm, 4 mm, 4.5 mm, 5 mm, 5.5 mm, 6 mm, 6.5 mm, or 7 mm.

In the foregoing solution, when W₂≥3 mm, the first insulating member 125 may have a large area configured to cover the first flange portion 1261, which reduces the risk of warping of the first flange portion 1261 due to the first insulating member 125 not covering the first flange portion 1261 after assembly is completed, which facilitates improving reliability of the battery cell 12, and when W₂≤7 mm, the first hollow region 1251 having a large area may be arranged on the first insulating member 125, so that the first exposed region 12133 formed by the first wall 1213 has a large area, which facilitates improving the connection strength between the box body assembly 13 and the first wall 1213, so that when 3 mm≤W₂≤7 mm, the first insulating member 125 has a large area configured to cover the first flange portion 1261, and the first wall 1213 may form the first exposed region 12133 having a large area.

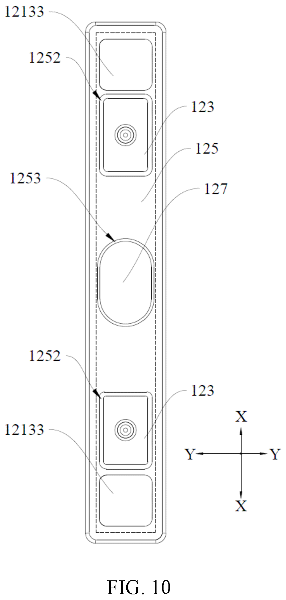

According to some embodiments of the present application, referring to FIG. 10, the second hollow region 1252 and the first hollow region 1251 are spaced apart.

The second hollow region 1252 may be formed through punching or the like.

The electrode terminal 123 running through the second hollow region 1252 and the second hollow region 1252 and the first hollow region 1251 being spaced apart means that a part of the first insulating member 125 is located between the electrode terminal 123 and the second hollow region 1252.

In the foregoing solutions, a part that is of the first insulating member 125 and that is located between the second hollow region 1252 and the first hollow region 1251 may be configured to be connected to the first wall 1213, which facilitates improving the connection strength between the first insulating member 125 and the first wall 1213.

According to some embodiments of the present application, referring to FIG. 5 to FIG. 8, the second wall 1214 and the side wall 1215 are of an integrally formed structure, along the direction of the thickness of the first wall 1213, one end of the side wall 1215 is connected to the second wall 1214, the other end of the side wall 1215 encloses an opening, and the first wall 1213 is the end cover 1211 that closes the opening.

The second wall 1214 and the side wall 1215 enclose a hollow structure with an opening at one end in the direction of the thickness of the first wall 1213, and the first wall 1213 covers and closes the opening, to form the casing 121 configured to accommodate the electrode assembly 122.

The second wall 1214 and the side wall 1215 are of an integrally formed structure, that is, the second wall 1214 and the side wall 1215 of the casing 121 are made by an integrated molding process, such as stamping or casting.

In the foregoing solutions, because the second wall 1214 and the side wall 1215 are integrally formed, a quantity of seams between the second wall 1214 and the side wall 1215 is small, assembly difficulty of the second insulating member 126 is low, and flatness after assembly is high.

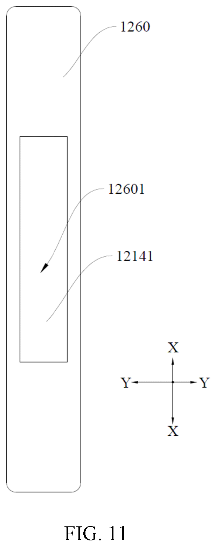

According to some embodiments of the present application, referring to FIG. 5 and FIG. 11, the body portion 1260 further covers the outer surface of the second wall 1214, the body portion 1260 is provided with a third hollow region 12601, the second wall 1214 forms a second exposed region 12141 at a position corresponding to the third hollow region 12601, and the second exposed region 12141 is configured to be connected to the box body 11.

The second wall 1214 forms the second exposed region 12141 at the position corresponding to the third hollow region 12601, so that the second wall 1214 of the casing 121 has a region avoided by the third hollow region 12601, thereby forming the second exposed region 12141 not covered by the second insulating member 126 on the second wall 1214.

There may be one or a plurality of third hollow regions 12601.

The shape of the third hollow region 12601 may include but is not limited to a rectangle, a triangle, a pentagon, a circle, an ellipse, or the like.

The second exposed region 12141 and the box body 11 may also be connected in various manners, such as adhesion or welding.

In the foregoing solutions, the first wall 1213 and the second wall 1214 of the casing 121 can be connected to the box body assembly 13 and the box body 11 respectively through the first exposed region 12133 and the second exposed region 12141, so that structural stability after the battery cell 12 is assembled to the box body 11 can be improved.

According to some embodiments of the present application, referring to FIG. 5 to FIG. 8, the battery cell 12 further comprises a pressure relief mechanism 127, the pressure relief mechanism 127 is arranged on the first wall 1213, the first insulating member 125 is provided with a through hole 1253, and along the direction of the thickness of the first wall 1213, the projection of the pressure relief mechanism 127 is located in the through hole 1253.

The pressure relief mechanism 127 is configured to release the pressure inside the battery cell 12 when the internal pressure or the temperature of the battery cell 12 reaches a predetermined value. The pressure relief mechanism 127 is arranged on the first wall 1213, and correspondingly, the first insulating member 125 is provided with the through hole 1253 configured to avoid the pressure relief mechanism 127, which is convenient for the pressure relief mechanism 127 to relieve the pressure inside the battery cell 12. The pressure relief mechanism 127 may be a pressure relief component such as an explosion-proof valve, an explosion-proof membrane, a gas valve, a pressure relief valve, a safety valve, or the like.

In the foregoing solutions, because the projection of the pressure relief mechanism 127 is located in the through hole 1253, when the battery cell 12 is in thermal runaway, the first insulating member 125 does not block the pressure relief mechanism 127, so that pressure relief of the battery cell 12 may be smoother, which facilitates improving reliability of the battery cell 12.

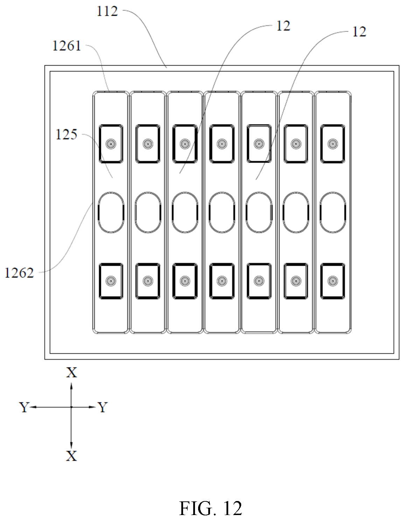

According to some embodiments of the present application, referring to FIG. 12, the present application provides the battery 100, including the battery cell 12 described in the one or the plurality of solutions.

In the foregoing solutions, because the battery cell 12 in the one or the plurality of solutions has high reliability, the battery 100 including the battery cell 12 in the one or the plurality of solutions also has high reliability.

According to some embodiments of the present application, referring to FIG. 4, the present application provides the battery 100, including the box body 11, the box body assembly 13, and the battery cell 12 in the one or the plurality of solutions, and the box body assembly 13 is arranged in the box body 11. The plurality of battery cells 12 are arranged in the box body 11. The box body assembly 13 is connected to first exposed regions 12133 of the plurality of battery cells 12.

In the foregoing solutions, because the battery cell 12 in the one or the plurality of solutions has high reliability, the battery 100 including the battery cell 12 in the one or the plurality of solutions also has high reliability.

According to some embodiments of the present application, referring to FIG. 1, the present application provides an electric device, including the battery 100 in the one or the plurality of solutions, and the battery 100 is configured to supply electric energy.

In the foregoing solutions, because the battery 100 in the one or the plurality of solutions has high reliability, the electric device including the battery 100 in the one or the plurality of solutions also has high reliability.

According to some embodiments of the present application, referring to FIG. 4 to FIG. 9, the present application provides the battery cell 12, the battery cell 12 includes the casing 121, the first insulating member 125, the second insulating member 126, the electrode terminal 123, and the pressure relief mechanism 127, the casing 121 includes the end cover 1211 and the casing body 1212, the casing body 1212 has the opening, and the end cover 1211 closes the opening.

The end cover 1211 has the first edge 12131 and the second edge 12132 that are adjacent to each other. The first insulating member 125 covers the outer surface of the end cover 1211. The second insulating member 126 includes a body portion 1260, a first flange portion 1261 and a second flange portion 1262. The body portion 1260 covers the outer surface of side wall 1215. The first flange portion 1261 and the second flange portion 1262 are arranged on the outer surface of the end cover 1211. The first flange portion 1261 is arranged along the first edge 12131. The second flange portion 1262 is arranged along the second edge 12132. The first flange portion 1261 has a first side edge 12611 away from the body portion 1260, the second flange portion 1262 has a second side edge 12621 away from the body portion 1260, and the first insulating member 125 covers the first side edge 12611 and the second side edge 12621. The first insulating member 125 is provided with a first hollow region 1251, the end cover 1211 forms the first exposed region 12133 at the position corresponding to the first hollow region 1251, and the first exposed region 12133 is configured to be connected to the box body assembly 13. The electrode terminal 123 is arranged on the end cover 1211. The electrode terminal 123 runs through the first hollow region 1251, and the first exposed region 12133 is arranged adjacent to the electrode terminal 123. Two electrode terminals 123 are provided, the two electrode terminals 123 are spaced apart along the first direction X, two first exposed regions 12133 are provided, the two first exposed regions 12133 are in one-to-one correspondence with the two electrode terminals 123, and along the first direction X, the first exposed region 12133 is located on the side that is of the electrode terminal 123 corresponding to the first exposed region 12133 and that is away from the other electrode terminal 123. The pressure relief mechanism 127 is arranged on the end cover 1211, the first insulating member 125 is provided with the through hole 1253, and in the direction of the thickness of the end cover 1211, the projection of the pressure relief mechanism 127 is located in the through hole 1253.

The first insulating member 125 is adhered after the second insulating member 126 is wrapped on the battery cell 12, and the first insulating member 125 covers the first side edge 12611 and the second side edge 12621, which may reduce the risk of warping of the first flange portion 1261 and the second flange portion 1262, to improve insulation performance of the battery cell 12, thereby improving reliability of the battery cell 12.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery cell, **characterized by** comprising:
a casing, comprising a first wall, a second wall and a side wall, wherein in the direction of the thickness of the first wall, the second wall and the first wall are arranged opposite each other, the side wall is arranged around the first wall and the second wall, and the first wall has a first edge and a second edge that are adjacent to each other;
a first insulating member, wherein the first insulating member covers the outer surface of the first wall; and
a second insulating member, wherein the second insulating member comprises a body portion, a first flange portion and a second flange portion, the body portion covers the outer surface of the side wall, the first flange portion and the second flange portion are arranged on the outer surface of the first wall, the first flange portion is arranged along the first edge, and the second flange portion is arranged along the second edge, wherein
the first insulating member covers at least part of the first flange portion and at least part of the second flange portion.

2. The battery cell according to claim 1, wherein the first flange portion and the second flange portion form an overlapping region at the corner of the first edge and the second edge, and the first insulating member covers the overlapping region.

3. The battery cell according to claim 1 or 2, wherein the first flange portion has a first side edge away from the body portion, the second flange portion has a second side edge away from the body portion, and the first insulating member covers the first side edge and the second side edge.

4. The battery cell according to any one of claims 1-3, wherein the first insulating member is provided with a first hollow region, the first wall forms a first exposed region at a position corresponding to the first hollow region, and the first exposed region is configured to be connected to a box body assembly.

5. The battery cell according to claim 4, wherein the battery cell further comprises an electrode terminal, and the electrode terminal is arranged on the first wall; and
the first insulating member is further provided with a second hollow region, and the electrode terminal runs through the second hollow region.

6. The battery cell according to claim 5, wherein the second hollow region is in communication with the first hollow region.

7. The battery cell according to claim 5 or 6, wherein two electrode terminals are provided, the two electrode terminals are spaced apart along a first direction, two first exposed regions are provided, the two first exposed regions are in one-to-one correspondence with the two electrode terminals, and along the first direction, the first exposed region is located on the side that is of the electrode terminal corresponding to the first exposed region and that is away from the other electrode terminal.

8. The battery cell according to claim 7, wherein along the first direction, the size of the first exposed region is H₃, and the following formula is satisfied: 10 mm≤H₃≤30 mm.

9. The battery cell according to claim 7 or 8, wherein the first edge extends along a second direction, the second edge extends along the first direction, and the first direction, the second direction, and the direction of the thickness of the first wall are perpendicular to each other; and
in the first direction, the size of the first flange portion is H₂, the minimum distance between an edge of the first insulating member and the first exposed region is H₁, and the following formula is satisfied: H₁-H₂≥2 mm.

10. The battery cell according to claim 9, wherein 1 mm≤H₂≤5 mm.

11. The battery cell according to claim 9 or 10, wherein 3 mm≤H₁≤7 mm.

12. The battery cell according to any one of claims 7-11, wherein the first edge extends along the second direction, the second edge extends along the first direction, and the first direction, the second direction, and the direction of the thickness of the first wall are perpendicular to each other; and
in the second direction, the size of the second flange portion is W₁, the minimum distance between the edge of the first insulating member and the first exposed region is W₂, and the following formula is satisfied: W₂-W₁≥2 mm.

13. The battery cell according to claim 12, wherein 1 mm≤W₁≤5 mm.

14. The battery cell according to claim 12 or 13, wherein 3 mm≤W₂≤7 mm.

15. The battery cell according to any one of claims 5-14, wherein the second hollow region and the first hollow region are spaced apart.

16. The battery cell according to any one of claims 1-15, wherein the second wall and the side wall are of an integrally formed structure, along the direction of the thickness of the first wall, one end of the side wall is connected to the second wall, the other end of the side wall encloses an opening, and the first wall is an end cover that closes the opening.

17. The battery cell according to any one of claims 1-16, wherein the body portion further covers the outer surface of the second wall, the body portion is provided with a third hollow region, the second wall forms a second exposed region at a position corresponding to the third hollow region, and the second exposed region is configured to be connected to a box body.

18. The battery cell according to any one of claims 1-17, wherein the battery cell further comprises a pressure relief mechanism, the pressure relief mechanism is arranged on the first wall, the first insulating member is provided with a through hole, and along the direction of the thickness of the first wall, the projection of the pressure relief mechanism is located in the through hole.

19. A battery, **characterized by** comprising the battery cell according to any one of claims 1-3 and 16-18.

20. A battery, **characterized by** comprising:
a box body;
a box body assembly, arranged in the box body; and
a plurality of battery cells according to any one of claims 4-15, arranged in the box body, wherein
the box body assembly is connected to first exposed regions of the plurality of battery cells.

21. An electric device, **characterized by** comprising the battery according to claim 19 or 20, wherein the battery is configured to supply electric energy.
